# EUROPEAN PATENT SPECIFICATION

(11) **EP 2 482 412 B1**
(45) Date of publication and mention of the grant of the patent: **27.04.2016**
(21) Application number: 11762031.0
(22) Date of filing: 04.05.2011
(51) Int. Cl.: H02H 11/00, H02J 7/00, H02H 7/18

(54) **SWITCH CONTROL CIRCUIT FOR POWER SUPPLY AND POWER SUPPLYING CIRCUIT**
SCHALTSTEUERUNGSKREIS FÜR EINE STROMVERSORGUNG UND STROMVERSORGUNGSKREIS
CIRCUIT DE COMMANDE DE COMMUTATION POUR ALIMENTATION ÉLECTRIQUE, ET CIRCUIT D'ALIMENTATION ÉLECTRIQUE

(43) Date of publication of application: 01.08.2012
(73) Proprietor: Huawei Technologies Co., Ltd., Longgang District Shenzhen, Guangdong 518129 (CN)
(72) Inventor: ZOU, Shanqin, Shenzhen Guangdong 518129 (CN)
(74) Representative: Pfenning, Meinig & Partner mbB
(86) International application number: PCT/CN2011/073659
(87) International publication number: WO 2011/120457

(56) References cited:
- CN-A- 1 106 348
- CN-A- 101 832 209
- CN-Y- 2 615 991
- DE-U1- 20 109 606
- US-A- 3 823 342
- US-A- 4 896 637

## Description

### FIELD OF THE INVENTION

The present invention relates to a control technology, and in particular, to a switch control circuit for a power supply and a power supplying circuit.

### BACKGROUND OF THE INVENTION

In a power supply system, it is often required to force a battery pack to supply power to a load or to provide battery power-down protection. For example, when the mains supply is powered down and the system fails and needs to be replaced; or the battery voltage is lower than a set threshold and important services need to be guaranteed; or commissioning of the power supply system is performed, the battery pack needs to be forcibly powered up manually.

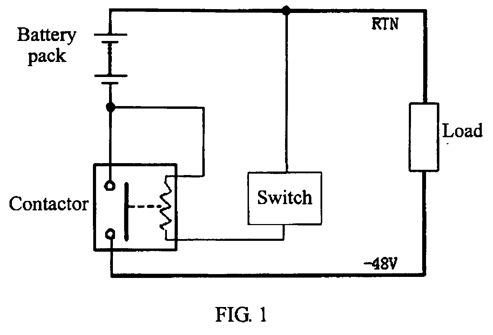

A common switch control circuit for a battery pack is shown in FIG 1. The battery pack, a load, and contacts of a contactor are connected in series to form a main circuit. In addition, a positive electrode of the battery pack is connected with a first junction A of a coil of the contactor through a switch, a second junction B of the coil is connected with a negative electrode of the battery pack, and the switch is the switch control circuit for the battery pack. When the switch is closed manually, the battery pack and the coil of the contactor form a loop, a current flows through the coil of the contactor, so that the contacts of the contactor are closed, the main circuit is converted into a close circuit, and the battery pack supplies power to the load.

However, the switch control circuit has the following disadvantage. When the switch and the coil of the contactor are connected incorrectly or the battery is connected incorrectly, the cable or battery is easily burnt down, affecting the reliability of power supplying.

Document US 3,823,342 discloses a circuit including a diode and a current limiting resistor being serially connected between a grounded electrical conductor and the frame portion of an electrically operable machine. The diode is operable to prevent the frame from being raised to the full-line voltage of the power source in the event the polarity of the conductors is reversed. The current limiting resistor limits the flow of current, caused by transient voltages appearing on the frame, to an intrinsically safe level. The circuit further includes a contactor.

DE 201 09 606 discloses a protection circuit for power supplies for telecommunication units.

### SUMMARY OF THE INVENTION

Accordingly, to solve the technical problem, the present invention provides a switch control circuit for a power supply and a power supplying circuit, to improve the reliability of power supplying.

Therefore, the following technical solutions are adopted in embodiments of the present invention.

An embodiment of the present invention provides a switch control circuit for a power supply, which includes:
a cathode of a diode is connected with a negative electrode of the power supply, an anode of the diode is connected with a first terminal of a short circuit protection element, a second terminal of the short circuit protection element is connected with a first terminal of a switch unit, a second terminal of the switch unit is connected with a first junction of a contactor, and a second junction of the contactor is connected with a positive electrode of the power supply, wherein the first and second junction are connected by a coil of the contactor and,
where the short circuit protection element is configured to provide short circuit protection to a loop to which it belongs, and the switch unit is configured to control on/off of the loop to which it belongs.

An embodiment of the present invention further provides a power supplying circuit, which includes:
a first contact of a contactor is connected with a negative electrode of a power supply, and a positive electrode of the power supply and a second contact of the contactor serve as two output terminals of the power supplying circuit to supply power to a load; and
a cathode of a diode is connected with the negative electrode of the power supply, an anode of the diode is connected with a first terminal of a short circuit protection element, a second terminal of the short circuit protection element is connected with a first terminal of a switch unit, a second terminal of the switch unit is connected with a first junction of the contactor, and a second junction of the contactor is connected with the positive electrode of the power supply wherein the first and second junction are connected by a coil of the contactor and,
in which the short circuit protection element is configured to provide short circuit protection to a loop to which it belongs, and the switch unit is configured to control on/off of the loop to which it belongs.

The technical effects of the technical solutions are analyzed as follows.

The short circuit protection element can prevent the damage of a component such as a power supply or cable caused by any short circuit such as a short circuit due to incorrect connection; and the diode can prevent the damage of a component such as the power supply or cable caused by reverse connection of the power supply or reverse connection of the cable, thereby improving the reliability of supplying power to the load.

The present invention is defined in the appended claims.

### BRIEF DESCRIPTION OF THE DRAWINGS

FIG. 1 is a schematic structural diagram of a control circuit in the prior art;
FIG 2 is a schematic structural diagram of a switch control circuit for a power supply in an embodiment of the present invention;
FIG 3 is a schematic structural diagram of another switch control circuit for a power supply in an embodiment of the present invention; and
FIG. 4 is a schematic structural diagram of a third switch control circuit for a power supply in an embodiment of the present invention.

### DETAILED DESCRIPTION OF THE EMBODIMENTS

A switch control circuit for a power supply in an embodiment of the present invention includes:
a cathode of a diode is connected with a negative electrode of the power supply, an anode of the diode is connected with a first terminal of a switch unit through a short circuit protection element, a second terminal of the switch unit is connected with a first terminal of a contactor, and a second terminal of the contactor is connected with a positive electrode of the power supply,
in which the short circuit protection element is configured to provide short circuit protection to a loop belonging to the short circuit protection element belongs, and the switch unit is configured to control on/off of the loop to which it belongs.

The implementation of the switch control circuit for a power supply in the embodiment of the present invention is illustrated in detail below with reference to accompanying drawings.

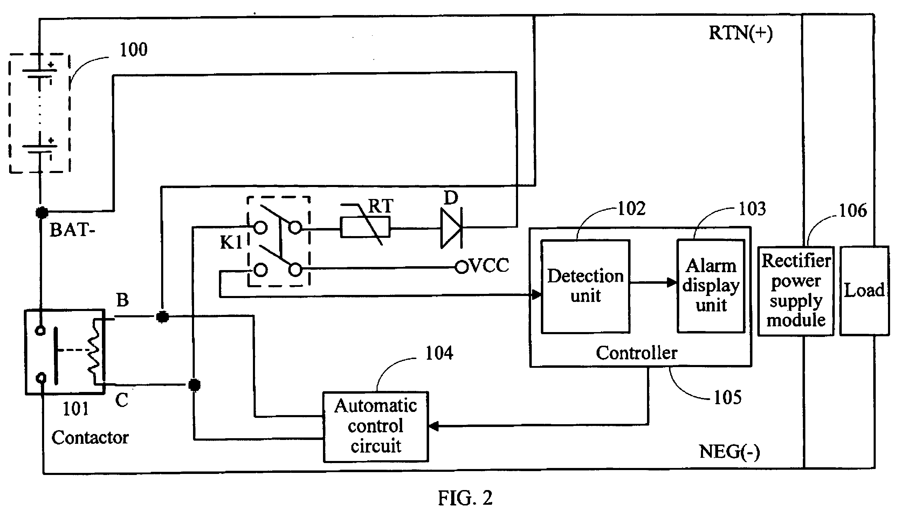

FIG 2 is a schematic structural diagram of a switch control circuit for a power supply in an embodiment of the present invention. As shown in FIG 2, the circuit includes.

A power supply 100, a load 106, and contacts of a contactor 101 are connected in series to form a main circuit. Specifically, a first contact of the contactor 101 is connected with a negative electrode of the power supply 100, and a positive electrode of the power supply 100 and a second contact of the contactor 101 serve as two output terminals of a power supplying circuit to supply power to the load 106.

The positive electrode of the power supply 100 is connected with a second junction B of the contactor 101, a first junction C of the contactor 101 is connected with a second terminal of a short circuit protection element RT through a first sub-switch of a double-pole double-throw switch K1, a first terminal of the short circuit protection element RT is connected with an anode of a diode D, and a cathode of the diode D is connected with the negative electrode of the power supply 100.

Two contacts of a second sub-switch of the double-pole double-throw switch K1 are connected with a preset voltage VCC and an input terminal of a detection unit 102, respectively.

The detection unit 102 is configured to detect a preset voltage signal.

An alarm display unit 103 is configured to give an alarm when the detection unit detects the preset voltage signal.

The alarm may be an audible and visual alarm, an indicator alarm, LCD alarm display information, an audio alarm, a report to a remote management platform, or the like, which is not limited herein.

As shown in FIG 2, the circuit may further include:
an automatic control unit 104, configured to control, under the instruction of a controller 105, open and close of the contacts of the contactor 101, so as to control whether the power supply 100 supplies power; and
the controller 105, configured to instruct the automatic control unit 104 to control the contactor 101 according to a preset rule.

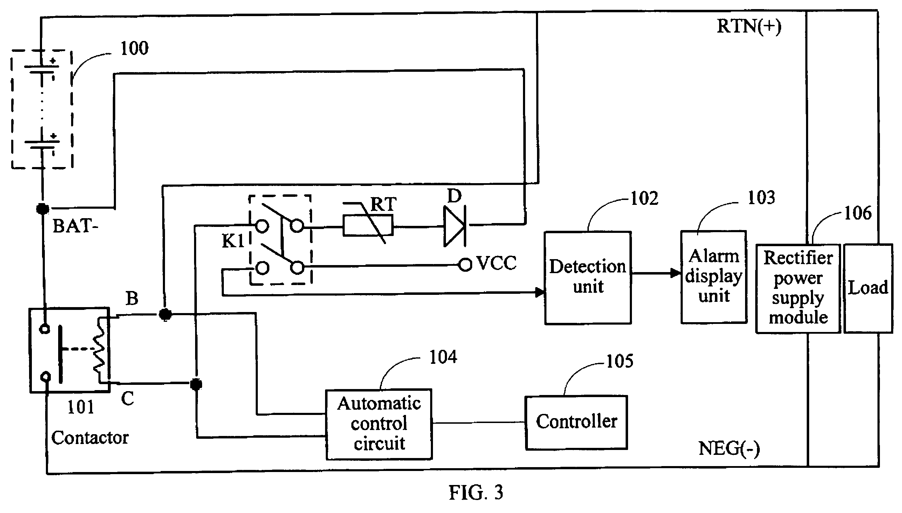

In FIG 2, the detection unit 102 and the alarm display unit 103 are disposed in the controller 105; or, as shown in FIG 3, the detection unit 102 and the alarm display unit 103 may also be separated from the controller 105 and disposed separately, which is not limited herein.

The working process of the control circuit shown in FIG 2 is illustrated below.

When the double-pole double-throw switch K1 is turned off, the automatic control unit 104 controls the contactor 101; once the contactor 101 is in an open state and it is required to manually force the power supply 100 to supply power to the load, a user controls the double-pole double-throw switch K1 to close, the power supply 100, the diode D, the short circuit protection element RT, the double-pole double-throw switch K1, and the coil of the contactor 101 form a loop and a current flows through the coil of the contactor 101, so that the contacts of the contactor 101 are closed, and then the main circuit changes to be a closed state, and the power supply 100 supplies power to the load. The short circuit protection element RT may be, for example, a resettable fuse PTC, a fuse, or a thermistor.

In addition, after the double-pole double-throw switch K1 is closed, the input terminal of the detection unit and the preset voltage Vcc form a loop and the input terminal of the detection unit 102 receives a high voltage signal, so that the alarm display unit 103 gives an alarm to enable an operator to learn that the operation of controlling the double-pole double-throw switch K1 to close is effective.

In the control circuit shown in FIG 2 and FIG 3, the short circuit protection element RT can prevent the damage of a component such as the power supply or a cable caused by any short circuit such as a short circuit due to incorrect connection; and the diode D can prevent the damage of a component such as the power supply or cable caused by reverse connection of the power supply or reverse connection of the cable, thereby improving the reliability of supplying power to the load.

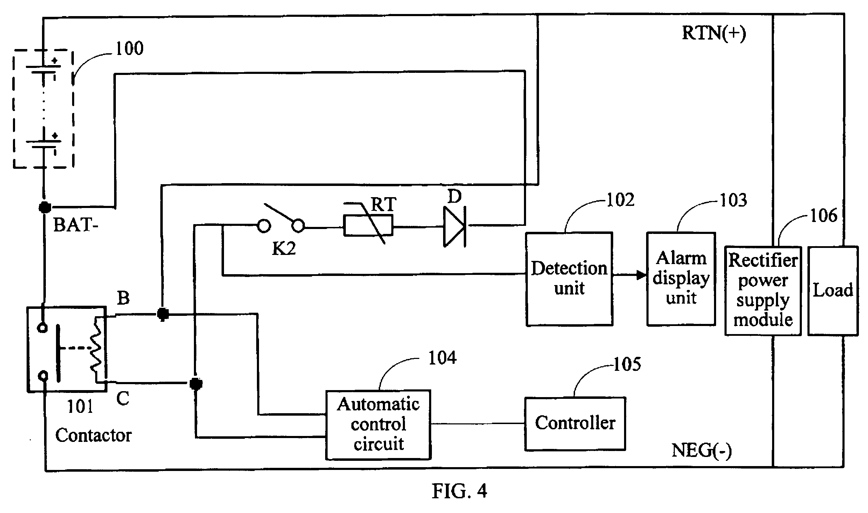

In addition, as shown in FIG 4, the double-pole double-throw switch K1 may also be replaced with a single-pole single-throw switch K2. At this time, the single-pole single-throw switch K2 is connected between the second terminal of the short circuit protection element RT and the first junction C of the contactor 101. At this time, the input terminal of the detection unit 102 may be connected with the first junction C of the contactor 101.

The working process of the control circuit shown in FIG 4 is illustrated as follows.

When the single-pole single-throw switch K2 is turned off, the automatic control unit 104 controls the contactor 101; once the contactor 101 is in an open state and it is required to manually force the power supply 100 to supply power to the load, the user controls the single-pole single-throw switch K2 to close, the power supply 100, the diode D, the short circuit protection element RT, the single-pole single-throw switch K2, and the coil of the contactor 101 form a loop, and a current flows through the coil of the contactor 101, so that the contacts of the contactor 101 are closed, and then the main circuit changes to be a closed state , and the power supply 100 supplies power to the load.

In addition, the input terminal of the detection unit 102 is connected with the first junction C of the contactor 101, when the single-pole single-throw switch K2 is closed, the current flows through the coil of the contactor 101, and the switch are closed, so that the first junction C is at a low level, the input terminal of the detection unit receives a low level signal, so that the alarm display unit gives an alarm to enable the operator to learn that the operation of controlling the double-pole double-throw switch K1 to close is effective; once the single-pole single-throw switch K2 is turned off, the first junction C of the contactor 101 changes to a high level, and the input terminal of the detection unit receives a high level signal, so that the alarm display unit does not work.

In the control circuit shown in FIG 2 to FIG 4, a rectifier power supply module 106 may further be disposed at two terminals of the load to rectify the current output to the load, so as to output electric energy required by the load.

Moreover, the controller 105 may further include an overdischarge detection unit to detect whether the power supply 100 is overdischarged. Specifically, when it is detected that the voltage of the power supply drops to a preset value, the controller judges that a battery will be overdischarged and then the controller may automatically control the contactor to turn off, so that the battery cannot be discharged any more, thereby preventing the damage the power supply due to further drop of the voltage of the power supply.

For the circuit structure shown in FIG 2 to FIG 4, the switch control circuit for a power supply and the power supply in the embodiment of the present application form the power supplying circuit for supplying power to the load in the embodiment of the present application.

It should be noted that the above description is merely about exemplary embodiments of the present invention, and persons of ordinary skill in the art may make various improvements and refinements without departing from the principle of the present invention. All such modifications and refinements should be construed as falling within the protection scope of the present invention.

## Claims

1. A switch controls circuit for a power supply (100), comprising:
a diode (D), a short circuit protection element (RT), a switch unit (K_{1,}K₂), and a contactor (101), wherein:
a cathode of the diode (D) is connected with a negative electrode of the power supply (100), an anode of the diode (D) is connected with a first terminal of the short circuit protection element (RT), a second terminal of the short circuit protection element (RT) is connected with a first terminal of the switch unit (K1; K2), a second terminal of the switch unit (K1; K2) is connected with a first junction of the contactor (101), and a second junction of the contactor is connected with a positive electrode of the power supply (100), wherein the first and second junction are connected by a coil of the contactor (100), wherein the short circuit protection element (RT) is configured to provide short circuit protection to a loop to which it belongs, and the switch unit (K1; K2) is configured to control on/off of the loop to which it belongs, and wherein a first contact of the contactor (101) is connected with the negative electrode of the power supply (100), and the positive electrode of the power supply (100) and a second contact of the contactor (101) serve as two output terminals of the power supplying circuit to supply power to a load.

2. The circuit according to claim 1, wherein the switch unit is a double-pole double-throw switch (K1), and one sub-switch of the switch is connected between the first junction of the contactor (101) and the second terminal of the short circuit protection element (RT); or the switch unit is a single-pole single-throw switch (K2), and the switch is connected in series between the first junction of the contactor (101) and the second terminal of the short circuit protection element (RT).

3. The circuit according to claim 2, further comprising:
a detection unit (102), wherein when the switch unit is a double-pole double-throw switch (K1), an input terminal of the detection unit (102) is connected with a preset voltage (VCC) through the other sub-switch of the double-pole double-throw switch; when the switch unit is a single-pole single-throw switch (K2), an input terminal of the detection unit (102) is connected with the first junction of the contactor (101); and the detection unit (102) is configured to detect a preset voltage signal; and
an alarm display unit (103), configured to give an alarm when the detection unit (102) detects the preset voltage signal.

4. A power supplying circuit, comprising:
a switch control circuit according to any of claims 1 through 3.

5. The power supplying circuit according to claim 4, further comprising:
a rectifier power supply module (106), wherein two terminals of the module are connected with two output terminals of the power supplying circuit respectively to rectify a current output to the load, so as to output electric energy required by the load.

## Patentansprüche

1. Schaltersteuerschaltung für eine Leistungsversorgung (100), die Folgendes umfasst:
eine Diode (D), ein Kurzschlussschutzelement (RT), eine Schalteinheit (K1; K2) und ein Schaltschütz (101) wobei:
eine Katode der Diode (D) mit der negativen Elektrode der Leistungsversorgung (100) verbunden ist, eine Anode der Diode (D) mit einem ersten Anschluss des Kurzschlussschutzelements (RT) verbunden ist, ein zweiter Anschluss des Kurzschlussschutzelements (RT) mit einem ersten Anschluss der Schalteinheit (K1; K2) verbunden ist; ein zweiter Anschluss der Schalteinheit (K1; K2) mit einer ersten Verbindung des Schaltschützes (101) verbunden ist und eine zweite Verbindung des Schaltschützes mit einer positiven Elektrode der Leistungsversorgung (100) verbunden ist, wobei die erste und die zweite Verbindung durch eine Spule des Schaltschützes (100) verbunden sind, wobei das Kurzschlussschutzelement (RT) konfiguriert ist, einen Kurzschlussschutz für eine Schleife, zu der es gehört, bereitzustellen, und die Schalteinheit (K1; K2) konfiguriert ist, das Ein-/Ausschalten der Schleife, zu der sie gehört, zu steuern, und wobei der erste Kontakt des Schaltschützes (101) mit der negativen Elektrode der Leistungsversorgung (100) verbunden ist und die positive Elektrode der Leistungsversorgung (100) und ein zweiter Kontakt des Schaltschützes (101) als zwei Ausgangsanschlüsse der Leistungsversorgungsschaltung dienen, um einer Last Leistung zuzuführen.

2. Schaltung nach Anspruch 1, wobei die Schalteinheit ein zweipoliger Umschalter (K1) ist, wobei ein Nebenschalter des Schalters zwischen die erste Verbindung des Schaltschützes (101) und den zweiten Anschluss des Kurzschlussschutzelements (RT) geschaltet ist; oder die Schalteinheit ein einpoliger Ausschalter (K2) ist und der Schalter zwischen die erste Verbindung des Schaltschützes (101) und den zweiten Anschluss des Kurzschlussschutzelements (RT) in Reihe geschaltet ist.

3. Schaltung nach Anspruch 2, die ferner Folgendes umfasst:
eine Detektionseinheit (102), wobei, wenn die Schalteinheit ein zweipoliger Umschalter (K1) ist, ein Eingangsanschluss der Detektionseinheit (102) durch den anderen Nebenschalter des zweipoligen Umschalters mit einer vorgegebenen Spannung (VCC) verbunden ist; wenn die Schalteinheit ein einpoliger Ausschalter (K2) ist, ein Eingangsanschluss der Detektionseinheit (102) mit der ersten Verbindung des Schaltschützes (101) verbunden ist; und die Detektionseinheit (102) konfiguriert ist, ein vorgegebenes Spannungssignal zu detektieren; und
eine Alarmanzeigeeinheit (103), die konfiguriert ist, einen Alarm zu geben, wenn die Detektionseinheit (102) das vorgegebene Spannungssignal detektiert.

4. Leistungsversorgungsschaltung, die Folgendes umfasst:
eine Schaltersteuerschaltung nach einem der Ansprüche 1 bis 3.

5. Leistungsversorgungsschaltung nach Anspruch 4, die ferner Folgendes umfasst:
ein Gleichrichter-Leistungsversorgungsmodul (106), wobei die beiden Anschlüsse des Moduls jeweils mit zwei Ausgangsanschlüssen der Leistungsversorgungsschaltung verbunden sind, um eine Stromausgabe zu der Last gleichzurichten, um die durch die Last benötigte elektrische Energie auszugeben.

## Revendications

1. Circuit de commande de commutation pour une alimentation électrique (100), comprenant :
une diode (D), un élément de protection contre les courts-circuits (RT), une unité de commutation (K1 ; K2), et un contacteur (101), une cathode de la diode (D) étant connectée à une électrode négative de l'alimentation électrique (100), une anode de la diode (D) étant connectée à une première borne de l'élément de protection contre les courts-circuits (RT), une deuxième borne de l'élément de protection contre les courts-circuits (RT) étant connectée à une première borne de l'unité de commutation (K1 ; K2), une deuxième borne de l'unité de commutation (K2 ; K2) étant connectée à une première jonction du contacteur (101), et une deuxième jonction du contacteur étant connectée à une électrode positive de l'alimentation électrique (100), les première et deuxième jonctions étant connectées par une bobine du contacteur (100), l'élément de protection contre les courts-circuits (RT) étant configuré pour fournir une protection contre les courts-circuits à une boucle à laquelle il appartient, et l'unité de commutation (K1 ; K2) étant configurée pour commander la mise sous tension/hors tension de la boucle à laquelle elle appartient, et un premier contact du contacteur (101) étant connecté à l'électrode négative de l'alimentation électrique (100), et à l'électrode positive de l'alimentation électrique (100) et un deuxième contact du contacteur (101) servant comme deux bornes de sortie du circuit d'alimentation électrique pour fournir une alimentation à une charge.

2. Circuit selon la revendication 1, dans lequel l'unité de commutation est un commutateur bipolaire à deux directions (K1), et un sous-commutateur du commutateur est connecté entre la première jonction du contacteur (101) et la deuxième borne de l'élément de protection contre les courts-circuits (RT) ; ou l'unité de commutation est un commutateur unipolaire à une direction (K2), et le commutateur est connecté en série entre la première jonction du contacteur (101) et la deuxième borne de l'élément de protection contre les courts-circuits (RT).

3. Circuit selon la revendication 2, comprenant en outre :
une unité de détection (102), lorsque l'unité de commutation est un commutateur bipolaire à deux directions (K1), une borne d'entrée de l'unité de détection (102) étant connectée à une tension prédéfinie (VCC) par l'intermédiaire de l'autre sous-commutateur du commutateur bipolaire à deux directions ; lorsque l'unité de commutation est un commutateur unipolaire à une direction (K2), une borne d'entrée de l'unité de détection (102) étant connectée à la première jonction du contacteur (101) ; et l'unité de détection (102) étant configurée pour détecter un signal de tension prédéfinie ; et
une unité d'affichage d'alarme (103), configurée pour donner l'alarme lorsque l'unité de détection (102) détecte le signal de tension prédéfinie.

4. Circuit d'alimentation électrique, comprenant :
un circuit de commande de commutation selon l'une quelconque des revendications 1 à 3.

5. Circuit d'alimentation électrique selon la revendication 4, comprenant en outre :
un module d'alimentation électrique redresseur (106), deux bornes du module étant connectées à deux bornes de sortie du circuit d'alimentation électrique respectivement pour redresser une sortie de courant par rapport à la charge, afin de délivrer l'énergie électrique requise par la charge.
